# EUROPÄISCHE PATENTSCHRIFT

(11) **EP 1 432 276 B1**
(45) Veröffentlichungstag und Bekanntmachung des Hinweises auf die Patenterteilung: **14.07.2004**
(21) Anmeldenummer: 02360353.3
(22) Anmeldetag: 17.12.2002
(51) Int. Cl.: H04Q 11/04

(54) **Mobiles Scramblermodul**
Mobile scrambling module
Module de d'embrouillage mobile

(43) Veröffentlichungstag der Anmeldung: 23.06.2004
(73) Patentinhaber: ALCATEL, 75008 Paris (FR)
(72) Erfinder: Ashrafi, Bagher, 73240 Wendlingen (DE)
(74) Vertreter: Menzietti, Domenico, Dipl.-Ing

(56) Entgegenhaltungen:
- "ZERTIFIZIERUNGSREPORT BSI-DSZ-ITSEC-0123-2001 ZU BABYLONMETA VARIANTE S0 RELEASE 1.0 DER BIODATA INFORMATION TECHNOLOGY AG" BUNDESAMT FÜR SICHERHEIT IN DER INFORMATIONSTECHNIK, [Online] 28. Januar 2001 (2001-01-28), Seiten B-1-B-23, XP002243587 Gefunden im Internet: <URL:http://www.bsi.bund.de/zertifiz/zert/ reporte/0123.pdf> [gefunden am 2003-06-06]
- SCHNEIDERS S ET AL: "VERSCHLUESSELUNG BEI ALLEN ISDN-VERBINDUNGEN" NTZ (NACHRICHTENTECHNISCHE ZEITSCHRIFT), VDE VERLAG GMBH. BERLIN, DE, Bd. 50, Nr. 7, 1997, Seiten 50-52, XP000696828 ISSN: 0027-707X
- SCHOBLICK R: "ISDN-LINE-ENCRYPTION" FUNKSCHAU, FRANZIS-VERLAG K.G. MUNCHEN, DE, Bd. 73, Nr. 9, 14. April 2000 (2000-04-14), Seiten 28-31, XP000966560 ISSN: 0016-2841

## Beschreibung

Die Erfindung betrifft ein mobiles Scramblermodul für ISDN.

ISDN-Telekommunikationsverbindungen gelten gemeinhin als abhörsicher, da in einer Netzabschlußeinrichtung eines Teilnehmers auf Grund der Umwandlung eines 4-Draht S₀-Busses in eine 2-Draht Leitung zur Vermittlungsstelle die übertragenen digitalen Signale auf der 2-Draht Leitung derart verwürfelt sind, dass ein einfaches Abhören wie bei analogen POTS-Signalen nicht möglich ist; ISDN = Integrated Services Digital Network, POTS = Plain Old Telephone System.

Ein Abhören ist aber an solchen Stellen möglich, an denen eine Rückumwandlung von der 2-Draht Leitung in eine 4-Draht Leitung erfolgt. So z.B. in einer Vermittlungsstelle. Ein Abhören ist somit zumindest mit Zustimmung des Netzbetreibers möglich.

Bei weltweiten Verbindungen werden die ISDN-Signale durch zahlreiche Vermittlungsstellen geleitet, so dass es mehrere Stellen gibt, an denen ein Abhören möglich erscheint.

Aus dem Zertifizierungsreport BSI-DSZ-ITSEC-0123-2001 vom 28. Februar 2001 zu BabylonMETA Variante S0 Release 1.0 der Biodata Information Technology AG, ist ein ISDN-Echtzeit-Verschlüsselungsgerät bekannt, das eine abhörgeschützte ISDN-Kommunikation zwischen zwei Teilnehmern ermöglicht. Das Gerät kann Daten je nach Konfiguration mit einem Defaultschlüssel verschlüsseln oder in Abhängigkeit von der ISDN-Rufnummer einen von mehreren Schlüsseln auswählen. Zwischen zwei Teilnehmern wird jedoch immer der gleiche konfigurierte Schlüssel angewendet.

Aufgabe der Erfindung ist es, das Abhören von ISDN-Telekommunikationsverbindungen weiter zu erschweren.

Gelöst wird diese Aufgabe durch ein mobiles Scramblermodul gemäß Patentanspruch 1.

Die Erfindung sieht ein mobiles Scramblermodul für einen ersten Teilnehmer und zur Verwürfelung und Entwürfelung von ISDN-Signalen vor, das mindestens zwei S₀-Schnittstellen-Anschlüsse zur Zwischenschaltung des Scramblermoduls zwischen eine Netzabschlußeinrichtung und mindestens ein Teilnehmerendgerät und/oder eine Nebenstellenanlage und/oder einen Adapter beinhaltet. Ferner ist mindestens einen Prozessor zur Überwachung des D-Kanals vorgesehen, der zur Aussendung eines Passworts und einer Scrambler Code-Nummer nach Aufbau einer neuen Verbindung zu einem zweiten Teilnehmer dient und zur Aktivierung einer entsprechenden Verwürfelung für auszusendende ISDN-Signale und einer entsprechenden Entwürfelung für zu empfangende ISDN-Signale nach Erhalt einer Bestätigung vom zweiten Teilnehmer.

Das mobile Scramblermodul ist kostengünstig in der Herstellung. Es arbeitet automatisch, d.h. die Verwürfelung und Entwürfelung wird durch ein automatisches Verfahren bei jeder Verbindung gestartet und durchgeführt sofern die Gegenstelle über ein entsprechendes Scramblermodul verfügt. Das mobile Scramblermodul ist mobil einsetzbar. Es hat geringe Außenmaße, z.B. die Größe eines Netzadapters für eines schnurlosen Telefons. Für eine Gruppe von Teilnehmern, deren Kommunikation über ISDN erhöhten Sicherheitsanforderungen genügen soll, wird eine Anzahl von mobilen Scramblermodulen zur Verfügung gestellt. Alle mobilen Scramblermodule einer Gruppe haben das gleiche Passwort und eine Anzahl von gleichen Scrambler-Codes. Jeder Teilnehmer kann sein mobiles Scramblermodul an jeden Ort der Welt mitnehmen und bei einer beabsichtigten ISDN-Kommunikation mit einem anderen Teilnehmer der Gruppe sein mobiles Scramblermodul z.B. einem ISDN-Telefon seiner Wahl vorschalten und so automatisch eine gesicherte Verbindung zum anderen Teilnehmer aufbauen. Das Vorschalten gelingt auf einfache Art und Weise durch Lösen des Anschlussleitungs-Steckers am verwendeten Telefon und Zwischenschalten des mobilen Scramblermoduls.

In einer bevorzugten Ausgestaltung der Erfindung ist der Prozessor des mobilen Scramblermoduls derart ausgestaltet, nach Aufbau einer neuen Verbindung zum ersten Teilnehmer den D-Kanal auf Übermittlung eines Passworts und einer Scrambler Code-Nummer zu überwachen, eine Bestätigung zum zweiten Teilnehmer zu senden wenn das empfangene Passwort mit einem abgespeicherten Passwort übereinstimmt, und entsprechend der empfangenen Scrambler Code-Nummer eine entsprechende Entwürfelung für zu empfangende ISDN-Signale und eine entsprechende Verwürfelung für auszusendende ISDN-Signale zu aktivieren.

Ein solches Scramblermodul ist nicht nur in der Lage eine gesicherte Verbindung zu generieren, wenn der ihm zugehörige Teilnehmer eine Verbindung zu einem anderen Teilnehmer aufbauen will, sondern auch wenn ein anderer Teilnehmer den zugehörigen Teilnehmer erreichen will.

In einer weiteren bevorzugten Ausgestaltung der Erfindung ist der Prozessor des mobilen Scramblermoduls derart ausgestaltet, die Aussendung des Passworts und der Scrambler-Code-Nummer im für User-to-User Informationen reservierten Zeitschlitz des D-Kanals durchzuführen.

Besonders vorteilhaft wirkt sich die Übertargung über den D-Kanal aus, da dieser viel schwieriger zu überwachen ist als der B-Kanal. Über den D-Kanal, Übertragungsrate z.B. 16 kbit/s, werden in der Regel Signalisierungsinformationen und ggf. kurze Datenpakete übertragen. Über den B-Kanal, Übertragungsrate z.B. 64 kbit/s, werden in der Regel Nutzinformationen übertragen. Zusätzlich ist im D-Kanal eine Zeitschlitz für User-to-User Informationen reserviert. Für eine sehr kurze Zeitspanne von z.B. 100 ms können Informationen als Datenpaket übertragen werden. Diese kurze Zeitspanne ist sehr schwer zu überwachen. Zudem werden in dieser Zeitspanne nur das Passwort und eine Scrambler-Code-Nummer übertragen. Selbst wenn ein Abhören des Passworts und der Scrambler-Code-Nummer erfolgreich möglich wäre, so würde darüber nur eine Information darüber erlangt, dass eine sichere Übertragung folgt, die Unkenntnis über den verwendeten Scrambler-Code bleibt.

Innerhalb der 100 ms kann ein Datenstrom von maximal 128 Bit übertragen werden. Vorteilhaft wirkt sich daher aus, wenn der Prozessor derart ausgestaltet ist, für die Aussendung des Passworts und der Scrambler Code-Nummer einen Datenstrom von maximal 128 Bit zu generieren. Ein Scrambler-Code ist beispielsweise 16 Bit lang. Werden in einem mobilen Scramblermodul z.B. bis zu 32 Scrambler-Codes gespeichert, so können diese mittels 5 Bit kodiert werden, so dass 5 Bit für die Übertragung der Scrambler-Code-Nummer ausreichen. Ein Passwort, das z.B. auch als teilnehmerindividuelle Identifikationnummer bezeichnet werden kann, ist z.B. 16 Bit lang. Die Übertragung des Passworts und der Scrambler Code-Nummer erfordert in diesem Fall lediglich einen Datenstrom von 21 Bit. Durch geeignete Maßnahmen können diese 21 Bit z.B. in einem Datenstrom aus 128 Bit, der sonst aus zufällig ausgewählten Bits besteht, versteckt werden, um die Dekodierung bei einem möglichen Abhören zu erschweren. Beispielsweise ist nur jedes fünfte Bit des 128 Bit Datenstroms der Information über das Passwort und die Scrambler-Code-Nummer zugehörig.

Alternativ kann die Übertragung des Passworts und der Scrambler Code-Nummer auch im B-Kanal erfolgen.

In einer weiteren bevorzugten Ausgestaltung der Erfindung ist im mobilen Scramblermodul ein Speicher vorgesehen, auf den der Prozessor Zugriff hat und auf dem ein Passwort und eine Code-Tabelle beinhaltend mindestens zwei verschiedene Scrambler Code-Nummern und zugehörige Scrambler-Codes abgespeichert sind.

Wenn auf dem Speicher mindestens zwei länderspezifische D-Kanal Protokolle abgespeichert sind, kann das mobile Scramblermodul in mindestens zwei Ländern eingesetzt werden, in denen die entsprechenden D-Kanal Protokolle verwendet werden. In Europa kann durch das einheitliche Euro-D-Kanal Protokoll das mobile Scramblermodul bereits in zahlreichen Ländern eingesetzt werden. Durch zusätzliche Speicherung des in den USA verwendeten D-Kanal Protokolls kann das mobile Scramblermodul zusätzlich auch in den USA verwendet werden; usw.

Vorteilhaft wirkt sich aus, wenn beim mobilen Scramblermodul vier S₀-Schnittstellen-Anschlüsse vorgesehen sind, wobei zwei als Stecker und Gegenstecker für das direkte Verbinden mit einem Teilnehmerendgerät dienen und die anderen zwei als Stecker und Gegenstecker für das direkte Verbinden mit einer Netzabschlußeinrichtung dienen. Das mobile Scramblermodul kann dann wahlweise an einem Endgerät oder einer Netzabschlußeinrichtung platziert werden. Die Anordnung an einer Netzabschlußeinrichtung hat den Vorteil, dass mittels eines mobilen Scramblermoduls alle am S₀-Bus angeschlossenen Endgeröte automatisch die Scrambling-Funktion erhalten. Dies ist insbesodnere dann vorteilhaft, wenn das mobile Scramblermodul dauerhaft platziert werden soll, z.B. am Wohnsitz des Teilnehmers. In manchen Fällen ist die Netzabschlußeinrichtung nicht leicht zugänglich, z.B. in Hotels, oder für eine sichere Verbindung ist nur ein singuläres Endgerät vorgesehen. Dann ist das mobile Scramblermodul an diesem Endgerät zu platzieren.

Durch die zusätzliche Anbringung von länderspezifischen Steckern und/oder Anschlusskabeln kann der Einsatzbereich des mobilen Scramblermoduls noch erweitert werden.

In einer weiteren bevorzugten Ausgestaltung der Erfindung beinhaltet das mobile Scramblermodul ein FPGA oder ASIC, auf das bzw. den der Prozessor Zugriff hat und das mit zwei 4-Draht S₀-Schnittstellen-Leitungen verbunden ist, wobei bei jeder 4-Draht S₀-Schnittstellen-Leitung eine Leitung zur Übertragung von Nutzinformationssignalen vom ersten zum zweiten Teilnehmer dient, eine weitere Leitung zur Übertragung von Nutzinformationssignalen vom zweiten zum ersten Teilnehmer, eine weitere Leitung zur Übertragung von Taktsignalen und eine weitere Leitung zur Übertragung von Rahmensignalen. Das FPGA oder der ASIC sind derart programmiert, dass sie geeignet sind, die über die B-Kanäle übertragenen Informationen mit dem ausgewählten Scrambler-Code zu verwürfeln und anschließend weiterzuleiten sowie die über den D-Kanal übertragenen Informationen zum Prozessor zwecks Überwachung und zur Netzabschlußeinrichtung weiterzuleiten und Passwort und Scrambler-Code-Nummer in den D-Kanal einzufügen und zur Netzabschlußeinrichtung weiterzuleiten; FPGA = Freely Programmable Gate Array, ASIC = Application Specific Integrated Circuit.

Eine Netzabschlußeinrichtung ist beispielsweise ein Netzabschluß für einen Teilnehmer mit einer Basiskonfiguration oder ein Primärmultiplexanschluß für 30 Teilnehmer.

Die Verwüfelung kann auch als Kodierung, die Entwürfelung auch als Dekodierung bezeichnet werden.

Erfindungsgemäße mobile Scramblermodule sind kostengünstig herstellbar und praktisch in beliebiger Anzahl verfügbar. Sollte mal ein Scramblermodul verloren gehen, so tauschen die Teilnehmer einer Gruppe einfach ihren Satz gegen einen neuen aus und die sichere Übertragung von Informationen innerhalb einer Gruppe ist wieder gegeben. Durch die Verwendung von unterschiedlichen Scrambler-Codes innerhalb einer Gruppe ist die Entschlüsselung weiter erschwert. Die Auswahl eines zu verwendenden Scrambler-Codes erfolgt z.B. mittels Zufallsgenerator, was zu einer unsystematischen Verwendung der Scrambler-Codes führt und die Entschlüsselung weiter erschwert. Ein Abhören von ISDN-Telekommunikationsverbindungen ist damit auf einfache Art und Weise durch Verwendung mobiler, kostengünstiger Scramblermodule erheblich erschwert. Die Verwendung von erfindungsgemäßen Scramblermodulen hat zudem keinen negativen Einfluss auf normale ISDN-Verbindungen. Diese sind unverändert, auch bei zwischengeschalteten Scramblermodulen ohne Einschränkungen möglich. Ein Teilnehmer ohne entsprechende Gegenstelle hat durch die Verwendung eines Scramblermoduls beim rufenden Teilnehmer keine Störeinflüsse auf die Verbindung zu befürchten. Auch ein Teilnehmer mit Scramblermodul kann weiterhin normale, d.h. unverwürfelte Anrufe empfangen.

Bei einer erfindungsgemäßen Verbindung ist es nicht zwingend, dass beide Teilnehmer jeweils ein mobiles Scramblermodul verwenden. Ein Teilnehmer kann auch anstelle eines mobilen Scramblermoduls eine Netzabschlußeinrichtung oder eine Nebenstellenanlage oder ein Endgerät mit integrierter Scramblerfunktion verwenden. Die in einem mobilen Scramblermodul gespeicherten Informationen, z.B. Passwort, Scrambler-Codes, zugehörige Code-Nummern, etc., können z.B. über ein entsprechende Vorrichtung ausgelesen und z.B. in eine Nebenstellenanlage mittels Software eingeschrieben werden. Diese kann dann z.B. als Gegenstelle fungieren. Für's Auslesen kann am mobilen Scramblermodul eine entsprechende Schnittstelle vorgesehen sein. Soll ein Auslesen nicht möglich sein, kann durch geeignete Maßnahmen ein solches verhindert werden. Es wird z.B keine Ausleseschnittstelle vorgesehen. In einem solchen Fall müsste das Scramblermodul schon mechanisch geöffnet werden, was z.B. bei einer eingeschweißten Ausführung zu äußerlich erkennbaren Einwirkungen führt, die vom Eigentümer bemerkt werden und ihn zu einem kostengünstigen Austausch des Moduls veranlassen.

Ob eine Telekommunikations-Verbindung gesicherte oder normal besteht, ist für einen Teilnehmer anhand der Qualität der Verbindung oder anderer wahrnehmbarer Ereignisse nicht ermitteltbar. Der Teilnehmer hat aber über die Kenntnis der einer Gruppe zugehörigen Teilnehmer die Kenntnis darüber, welcher Teilnehmer über geeignete Scramblermodule verfügt und somit potentiell eine gesicherte Verbindung ermöglichen kann. Durch die automatische Zuschaltung der gesicherten Verbindung bei Vorhandensein einer entsprechenden Gegenstelle ist eine gesicherte Verbindung in der Regel zu einem Teilnehmer der Gruppe gegeben. Zur Rückversicherung kann der Teilnehmer während des Gesprächs nachfragen, ob die entsprechende Gegenstelle zur Zeit verwendet wird. Alternativ kann jeder mobile Scramblermodul derart ausgestaltet sein, dass bei Aktivierung der Verwürfelung ein akustisches Signal im B-Kanal übertragen wird. In einer weiteren Variante, z.B. bei der Übertragung von E-Mail über ISDN oder anderen Daten, werden die zu übertragenden Informationen zunächst zwischengespeichert und erst dann übertragen, wenn die Verwürfeelung aktiviert ist. Dazu sind z.B. die Rufnummern der Teilnehmer einer Gruppe im mobilen Scramblermodul gespeichert und bei Auswahl einer dieser Nummern erfolgt eine Übertragung von Daten erst nach Erhalt einer Bestätigung der Gegenstelle. Alternativ wird bei der Verwendung eines mobilen Scramblermoduls eine Übertragung stets nur verwürfelt ermöglicht. D.h. eine normale Verbindung ist mit Scramblermodul nicht möglich. Damit ist eine gesicherte Übertragung bei Verwendung eines mobilen Scramblermoduls gewährleistet.

Im folgenden wird die Erfindung anhand von zwei Ausführungsbeispielen und unter Zuhilfenahme von drei Figuren erläutert. Es zeigen:
- Fig. 1: eine schematische Darstellung einer Endstelle eines Teilnehmers mit einem erfindungsgemäßen Scramblermodul,
- Fig. 2: eine schematische Darstellung einer Endstelle eines weiteren Teilnehmers mit einem weiteren erfindungsgemäßen Scramblermodul und
- Fig. 3: einen schematisch dargestellten Aufbau eines erfindungsgemäßen, mobilen Scramblermoduls.

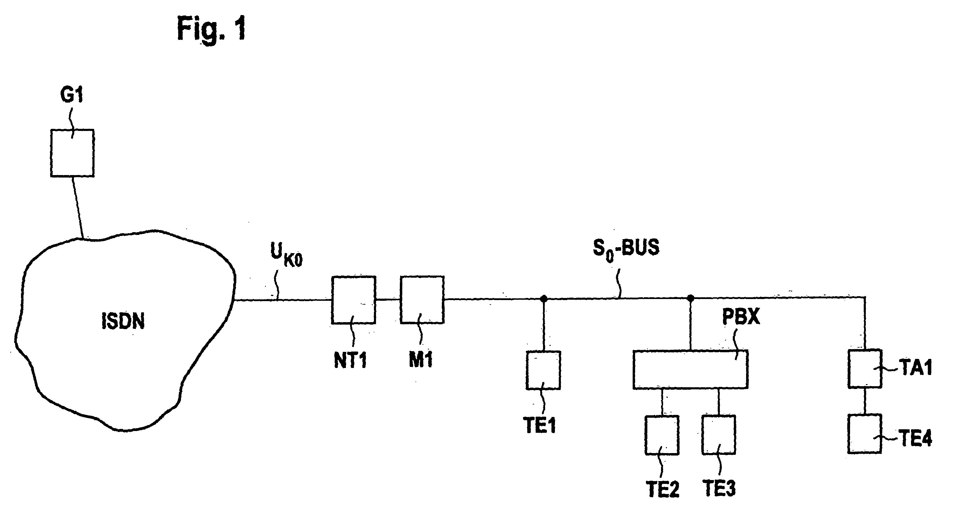

Das erste Ausführungsbeispiel wird nun zunächst unter Zuhilfenahme von Fig. 1 erläutert. Fig. 1 zeigt eine Endstelle eines Teilnehmers.

Die Endstelle beinhaltet eine Netzabschlußeinrichtung NT1, die netzseitig eine U_{K0}-Schnittstelle zu einem ISDN-Netz aufweist und teilnehmerseitig eine S₀-Schnittstelle zu einem S₀-Bus S₀-BUS aufweist. An den S₀-Bus S₀-BUS können mehrere Endgeräte angeschllossen werden. Im Beispiel sind ein Endgerät TE1, zwei Endgeräte TE2 und TE3 über eine Nebenstellenanlage PBX sowie ein Endgerät TE4 über einen Adapter TA1 an den S₀-Bus S₀-BUS angeschlossen.

Endgerät TE1 ist z.B. als ISDN-Telefon, als digitales Telefon, als Personalcomputer mit integrierter ISDN-Karte oder als digitales Faxgerät ausgeführt.

Endgerät TE4 ist z.B. als analoges Telefon oder als analoges Faxgerät ausgeführt. Der Adapter TA1 wird üblicherweise auch als Terminaladapter bezeichnet un ddient dazu, die analogen Signale des Endgeräts TE4 in digitale ISDN-Signale umzusetzen.

Endgeräte TE2 und TE3 sind z.B. als analoge und/oder digitale Endgeräte ausgeführt.

Netzabschlußeinrichtung NT1 ist z.B. als Netzabschluß in Basiskonfiguration ausgeführt und stellt dem Teilnehmer zwei B-Kanäle mit je 64 kbit/s zur Nutzinformationsübertragung und einen D-Kanal mit 16 kbit/s zur Übertragung von Signalisierungsinformationen und kurzen Datenpaketen zur Verfügung. Die Netzabschlußeinrichtung NT1 dient u.a. zur Protokollumsetzung von der 2-Draht U_{K0}-Leitung auf die 4-Draht S₀-Bus-Leitung.

Zwischen Netzabschlußeinrichtung NT1 und den Endgeräten TE1, TE2, TE3, TE4 ist ein mobiles Scramblermodul M1 geschaltet.

Das mobile Scramblermodul M1 dient zur Generierung einer sicheren Übertragung von Informationen zu einer Gegenstelle G1 mit einem entsprechenden Scramblermodul. Für jede Verbindung eines Endgeräts TE1, TE2, TE3, TE4 über das ISDN-Netz wird automatisch eine verwürfelte und damit sichere Verbindung generiert, sofern die angerufene Gegenstelle G1 über ein entsprechendes Scramblermodul verfügt. Die Identifikation des Scramblermoduls M1 erfolgt über ein Passwort, der zu verwendende Scrambler-Code über eine Scrambler-Code-Nummer.

Die Anzahl der an den S₀-Bus S₀-BUS angeschlossenen Endgeräte kann in Grenzen beliebig gewählt werden, z.B. null bis acht Endgeräte TE1, null bis acht Endgeräte TE2 und TE3, null bis acht Endgeräte TE4. Werden keine Endgeräte TE2 und TE3 verwendet, wird auch keine Nebenstellenanlage benötigt, wird kein Endgerät TE4 verwendet, wird auch kein Adapter TA1 benötigt.

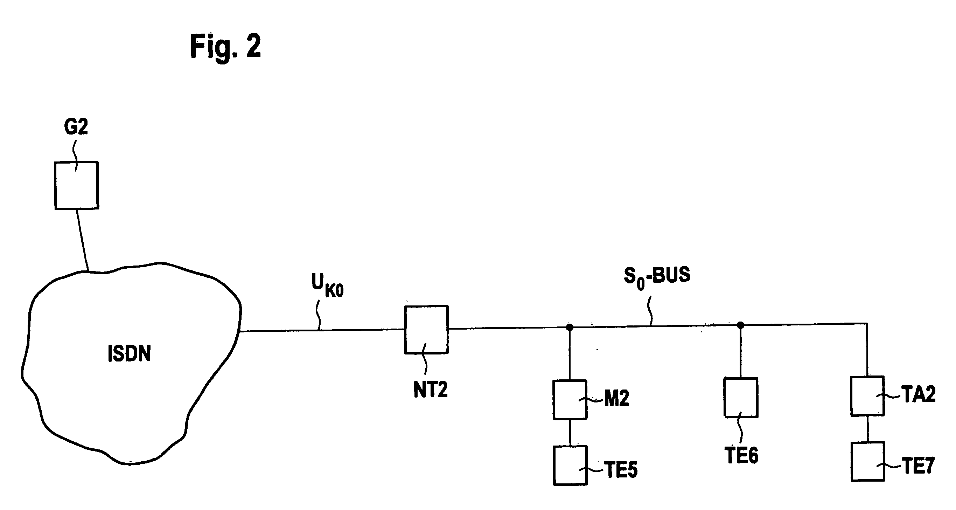

Das zweite Ausführungsbeispiel wird nun zunächst unter Zuhilfenahme von Fig. 2 erläutert. Fig. 2 zeigt eine Endstelle eines Teilnehmers.

Die Endstelle beinhaltet eine Netzabschlußeinrichtung NT2, die netzseitig eine U_{K0}-Schnittstelle zu einem ISDN-Netz aufweist und teilnehmerseitig eine S₀-Schnittstelle zu einem S₀-Bus S₀-BUS aufweist. An den S₀-Bus S₀-BUS können mehrere Endgeräte angeschlossen werden. Im Beispiel sind ein Endgerät TE5, ein Endgerät TE6 sowie ein Endgerät TE7 über einen Adapter TA2 an den S₀-Bus S₀-BUS angeschlossen.

Endgerät TE5 ist z.B. als ISDN-Telefon, als digitales Telefon, als Personalcomputer mit integrierter ISDN-Karte oder als digitales Faxgerät ausgeführt.

Endgerät TE6 ist z.B. als ISDN-Telefon, als digitales Telefon, als Personalcomputer mit integrierter ISDN-Karte oder als digitales Faxgerät ausgeführt.

Endgerät TE7 ist z.B. als analoges Telefon oder als analoges Faxgerät ausgeführt. Der Adapter TA2 wird üblicherweise auch als Terminaladapter bezeichnet un ddient dazu, die analogen Signale des Endgeräts TE7 in digitale ISDN-Signale umzusetzen.

Netzabschlußeinrichtung NT2 ist z.B. als Netzabschluß in Basiskonfiguration ausgeführt und stellt dem Teilnehmer zwei B-Kanäle mit je 64 kbit/s zur Nutzinformationsübertragung und einen D-Kanal mit 16 kbit/s zur Übertragung von Signalisierungsinformationen und kurzen Datenpaketen zur Verfügung. Die Netzabschlußeinrichtung NT2 dient u.a. zur Protokollumsetzung von der 2-Draht U_{K0}-Leitung auf die 4-Draht S₀-Bus-Leitung.

Zwischen Netzabschlußeinrichtung NT2 und Endgerät TE5 ist ein mobiles Scramblermodul M2 geschaltet.

Das mobile Scramblermodul M2 dient zur Generierung einer sicheren Übertragung von Informationen zu einer Gegenstelle G2 mit einem entsprechenden Scramblermodul. Für jede Verbindung des Endgeräts TE5 über das ISDN-Netz wird automatisch eine verwürfelte und damit sichere Verbindung generiert, sofern die angerufene Gegenstelle G2 über ein entsprechendes Scramblermodul verfügt. Die Identifikation des Scramblermoduls M2 erfolgt über ein Passwort, der zu verwendende Scrambler-Code über eine Scrambler-Code-Nummer.

Die Anzahl der an den S_{*0*}-Bus S_{*0*}-BUS angeschlossenen Endgeräte kann in Grenzen beliebig gewählt werden, z.B. null bis acht Endgeräte TE5, null bis acht Endgeräte TE6, null bis acht Endgeräte TE7. Wird kein Endgerät TE7 verwendet, wird auch kein Adapter TA2 benötigt.

Anstelle zwischen Netzabschlußeinrichtung NT2 und Endgerät TE5 kann das mobile Scramblermodul M2 oder ein oder zwei weitere auch zwischen Netzabschlußeinrichtung NT2 und Endgerät TE6 und/oder zwischen Netzabschlußeinrichtung NT2 und Adapter TA2 geschaltet werden.

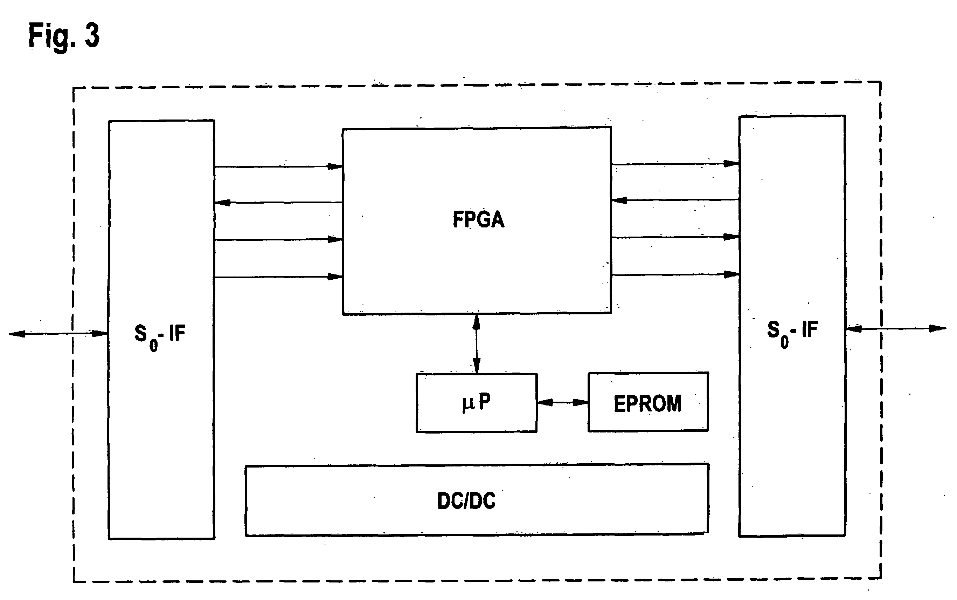

Die beiden Ausführungsbeispiele werden im folgenden unter Zuhilfenahme von Fig. 3 erläutert. Fig. 3 zeigt den Aufbau eines erfindungsgemäßen, mobilen Scramblermoduls.

Das mobile Scramblermodul weist zwei S₀-Schnittstellen-Anschlüsse S₀-IF auf. Werden die S₀-Schnittstellen-Anschlüsse S₀-IF als Stecker und Gegenstecker für das direkte Verbinden mit einer Netzabschlußeinrichtung NT1 ausgeführt, so kann das Scramblermodul im ersten Ausführungsbeispiel verwendet werden. Werden die S₀-Schnittstellen-Anschlüsse S₀-IF als Stecker und Gegenstecker für das direkte Verbinden mit einem Teilnehmerendgerät TE5 ausgeführt, so kann das Scramblermodul im zweiten Ausführungsbeispiel verwendet werden. Werden vier S₀-Schnittstellen-Anschlüsse S₀-IF vorgesehen, wobei zwei als Stecker und Gegenstecker für das direkte Verbinden mit einem Teilnehmerendgerät TE5 dienen und die anderen zwei als Stecker und Gegenstecker für das direkte Verbinden mit einer Netzabschlußeinrichtung NT1, so kann das Scramblermodul sowohl im ersten als auch im zweiten Ausführungsbeispiel verwendet werden. Die Netzabschlußeinrichtungen NT1 und NT2 können z.B. auch als Primärmultiplexanschlüsse ausgeführt sein.

Das mobile Scramblermodul weist ferner einen Prozessor µP auf. Der Prozessor µP ist z.B. als Mikroprozessor oder als Digitaler Signalprozesor ausgeführt. Er dient zur Überwachung des D-Kanals und zur Aussendung eines Passworts und einer Scrambler-Code-Nummer nach Aufbau einer neuen Verbindung zu einem zweiten Teilnehmer (Gegenstelle) und zur Aktivierung einer entsprechenden Verwürfelung für auszusendende ISDN-Signale und einer entsprechenden Entwürfelung für zu empfangende ISDN-Signale nach Erhalt einer Bestätigung vom zweiten Teilnehmer.

Der Prozessor µP überwacht nach Aufbau einer neuen Verbindung zum Teilnehmer, d.h. der Teilnehmer wird angerufen, den D-Kanal auf Übermittlung eines Passworts und einer Scrambler-Code-Nummer und sendet eine Bestätigung zum zweiten Teilnehmer wenn das empfangene Passwort mit einem abgespeicherten Passwort übereinstimmt. Ferner aktivert der Prozessor entsprechend der empfangenen Scrambler-Code-Nummer eine entsprechende Entwürfelung für zu empfangende ISDN-Signale und eine entsprechende Verwürfelung für auszusendende ISDN-Signale im entsprechenden B-Kanal.

Der Prozessor µP sendet bzw. steuert die Aussendung des Passworts und der Scrambler-Code-Nummer im für User-to-User Information reservierten Zeitschlitz des D-Kanals. Dazu wird ein Datenstrom von max. 128 Bits generiert.

Das mobiles Scramblermodul weist ferner ein Speicher EPROM auf, der z.B. als EPROM, PROM, Flash oder RAM ausgeführt ist; EPROM = Erasable Programmable Read Only Memory, RAM = Read Access Memory. Auf dem Speicher sind ein Passwort und eine Code-Tabelle beinhaltend mindestens zwei verschiedene Scrambler-Code-Nummern und zugehörige Scrambler-Codes abgespeichert. Der Prozessor µP hat Zugriff auf den Speicher EPROM. Vorteilhafterweise sind auf dem Speicher EPROM mindestens zwei länderspezifische D-Kanal Protokolle abgespeichert.

Das mobiles Scramblermodul weist des weiteren ein FPGA oder ASIC auf, auf das der Prozessor µP Zugriff hat und das mit zwei 4-Draht IOM- oder IOM-2-Schnittstellen-Leitungen verbunden ist, wobei bei jeder 4-Draht IOM- oder IOM-2-Schnittstellen-Leitung eine Leitung zur Übertragung von Nutzinformationssignalen vom ersten zum zweiten Teilnehmer dient, eine weitere Leitung zur Übertragung von Nutzinformationssignalen vom zweiten zum ersten Teilnehmer, eine weitere Leitung zur Übertragung von Taktsignalen und eine weitere Leitung zur Übertragung von Rahmensignalen; IOM = ISDN Oriented Modular = spezieller, serieller Bus in ISDN. Jeder S₀-Schnittstellen-Anschluß S₀-IF stellt auf der einen Seite eine S₀-Schnittstelle und auf der anderen Seite eine IOM- oder IOM-2-Schnittstelle zur Verfügung und führt somit eine Protokollumsetzung durch. Die empfangenen Takt- und Rahmensignale werden unverändert weitergeleitet und zusätzlich zur Synchronisation innerhalb des mobilen Scramblermoduls verwendet. Die empfangenen Nutzinformationen werden mittels eines ausgewählten Scrambler-Codes kodiert und anschließend weitergeleitet. Sind zwei B-Kanäle gleichzeitig für zwei verschiedene Verbindungen belegt, so werden für jeden B-Kanal die empfangenen Nutzinformationen mittels eines ausgewählten Scrambler-Codes kodiert und anschließend weitergeleitet, so dass in der Regel für die beiden B-Kanäle unterschiedliche Scrambler-Codes und damit unterschiedliche Kodierungen verwendet werden.

Des weiteren ist vorteilhafterweise ein DC-DC-Umsetzer DC/DC vorgesehen zwecks Bereitstellung der Versorgungsspannung für die stromführenden Bauteile. Die Versorgungsspannung wird aus der Fernspeisung gewonnen.

Abschließend wird ein Verfahren für einen rufenden, ersten Teilnehmer und einen angerufenen, zweiten Teilnehmer beschrieben.

Beim Verfahren für einen rufenden Teilnehmer sendet ein erster Teilnehmer (der Rufende) Signalisierungsinformationen über den D-Kanal zu einem zweiten, dem angerufenen Teilnehmer. Das mobile Scramblermodul des ersten Teilnehmers überwacht den D-Kanal, detektiert die Signalisierungsinformationen und sendet daraufhin das proprietäre Passwort des Scramblermoduls sowie eine aktuell zu verwendende Scrambler-Code-Nummer, der ein proprietärer Scrambler-Code zugehörig ist, über den D-Kanal zu dem zweiten Teilnehmer.

Im ersten Fall hat der zweiten Teilnehmer ein Scramblermodul, dem das gleiche proprietäre Passwort zugeordnet ist bzw. das der gleichen Gruppe von Scramblermodulen wie das Scramblermodul des ersten Teilnehmers zugehörig ist und geeignet ist, auf das proprietäre Passwort des Scramblermodul des ersten Teilnehmers zu reagieren. Das Scramblermodul des zweiten Teilnehmers sendet ein Bestätigungssignal über den Empfang und das Erkennen des proprietären Passwortes des Scramblermoduls des ersten Teilnehmers zum ersten Teilnehmer. Das Bestätigungssignal wird im B-Kanal übertragen. Die Übertragung kann ein proprietäres Passwort des Scramblermoduls des zweiten Teilnehmers enthalten, das vom Scramblermodul des ersten Teilnehmers erkannt wird. Beide Scramblermodule senden daraufhin Nutzinformationen im zugehörigen B-Kanal verwürfelt mit dem zugehörigen Scrambler-Code und entwürfeln empfangene Nutzinformationen im zugehörigen B-Kanal mit dem zugehörigen Scrambler-Code im Falle einer symmetrischen Kodierung und mit einem anderen, vorab festgelegten Scrambler-Code im Falle einer asymmetrischen Kodierung. Nach Beenden der Verbindung und deren Erkennung über den D-Kanal wird in beiden Scramblermodulen die Überwachung des jeweiligen D-Kanals zwecks Ermittlung des nächsten rufenden bzw. angerufenen Teilnehmers durchgeführt.

Im zweiten Fall hat der zweite Teilnehmer kein Scramblermodul, dem das gleiche proprietäre Passwort zugeordnet ist bzw. das der gleichen Gruppe von Scramblermodulen wie das Scramblermodul des ersten Teilnehmers zugehörig ist und geeignet ist, auf das proprietäre Passwort des Scramblermodul des ersten Teilnehmers zu reagieren. Das Scramblermodul des ersten Teilnehmers empfängt kein Bestätigungssignal und verwürfelt die Nutzinformationen im zugehörigen B-Kanal nicht. Eine normale ISDN-Verbindung wird durchgeführt.

## Patentansprüche

1. Mobiles Scramblermodul (M1, M2) für einen ersten Teilnehmer und zur Verwürfelung und Entwürfelung von ISDN-Signalen, beinhaltend mindestens zwei S₀-Schnittstellen-Anschlüsse (S₀-IF) zur Zwischenschaltung des Scramblermoduls zwischen eine Netzabschlußeinrichtung (NT1, NT2) und mindestens ein Teilnehmerendgerät (TE1, TE5) und/oder eine Nebenstellenanlage (PBX) und/oder einen Adapter (TA1), mindestens einen Prozessor (µP) zur Überwachung des D-Kanals und zur Aussendung eines Passworts und einer Scrambler-Code-Nummer nach Aufbau einer neuen Verbindung zu einem zweiten Teilnehmer und zur Aktivierung einer entsprechenden Verwürfelung für auszusendende ISDN-Signale und einer entsprechenden Entwürfelung für zu empfangende ISDN-Signale nach Erhalt einer Bestätigung vom zweiten Teilnehmer.

2. Mobiles Scramblermodul (M1, M2) gemäß Patentanspruch 1, **dadurch gekennzeichnet, dass** der Prozessor (µP) derart ausgestaltet ist, nach Aufbau einer neuen Verbindung zum ersten Teilnehmer den D-Kanal auf Übermittlung eines Passworts und einer Scrambler-Code-Nummer zu überwachen, eine Bestätigung zum zweiten Teilnehmer zu senden wenn das empfangene Passwort mit einem abgespeicherten Passwort übereinstimmt, und entsprechend der empfangenen Scrambler-Code-Nummer eine entsprechende Entwürfelung für zu empfangende ISDN-Signale und eine entsprechende Verwürfelung für auszusendende ISDN-Signale zu aktivieren.

3. Mobiles Scramblermodul (M1, M2) gemäß Patentanspruch 1, **dadurch gekennzeichnet, dass** der Prozessor (µP) derart ausgestaltet ist, die Aussendung des Passworts und der Scrambler-Code-Nummer im für User-to-User Information reservierten Zeitschlitz des D-Kanals durchzuführen.

4. Mobiles Scramblermodul (M1, M2) gemäß Patentanspruch 1, **dadurch gekennzeichnet, dass** der Prozessor (µP) derart ausgestaltet ist, für die Aussendung des Passworts und der Scrambler-Code-Nummer einen Datenstrom von maximal 128 Bits zu generieren.

5. Mobiles Scramblermodul (M1, M2) gemäß Patentanspruch 1, **dadurch gekennzeichnet, dass** ein Speicher (EPROM) vorgesehen ist, auf den der Prozessor (µP) Zugriff hat und auf dem ein Passwort und eine Code-Tabelle beinhaltend mindestens zwei verschiedene Scrambler-Code-Nummern und zugehörige Scrambler-Codes abgespeichert sind.

6. Mobiles Scramblermodul (M1, M2) gemäß Patentanspruch 1, **dadurch gekennzeichnet, dass** ein Speicher (EPROM) vorgesehen ist, auf den der Prozessor (µP) Zugriff hat und auf dem mindestens zwei länderspezifische D-Kanal Protokolle abgespeichert sind.

7. Mobiles Scramblermodul (M1, M2) gemäß Patentanspruch 1, **dadurch gekennzeichnet, dass** vier S₀-Schnittstellen-Anschlüsse (S₀-IF) vorgesehen sind, wobei zwei als Stecker und Gegenstecker für das direkte Verbinden mit einem Teilnehmerendgerät (TE5) dienen und die anderen zwei als Stecker und Gegenstecker für das direkte Verbinden mit einer Netzabschlußeinrichtung (NT1) dienen.

8. Mobiles Scramblermodul (M1, M2) gemäß Patentanspruch 1, **dadurch gekennzeichnet, dass** ein FPGA oder ASIC vorgesehen ist, auf das der Prozessor (µP) Zugriff hat und das mit zwei 4-Draht IOM- oder IOM-2-Schnittstellen-Leitungen verbunden ist, wobei bei jeder 4-Draht IOM- bzw. IOM-2-Schnittstellen-Leitung eine Leitung zur Übertragung von Nutzinformationssignalen vom ersten zum zweiten Teilnehmer dient, eine weitere Leitung zur Übertragung von Nutzinformationssignalen vom zweiten zum ersten Teilnehmer, eine weitere Leitung zur Übertragung von Taktsignalen und eine weitere Leitung zur Übertragung von Rahmensignalen.

## Claims

1. Mobile scrambler module (M1, M2) for a first user and for scrambling and unscrambling ISDN signals, containing at least two Sₒ interface connections (Sₒ IF) for interposing the scrambler module between a network termination device (NT1, NT2) and at least one user terminal (TE1, TE5) and/or a private branch exchange (PBX) and/or an adapter (TA1), at least one processor (µP) for monitoring the D channel and for sending a password and a scrambler code number after a new connection to a second user has been established and for activating corresponding scrambling for ISDN signals to be sent and corresponding unscrambling for ISDN signals to be received after confirmation has been obtained from the second user.

2. Mobile scrambler module (M1, M2) according to patent claim 1, **characterised in that** the processor (µP) is so configured as to monitor the D channel for communication of a password and a scrambler code number after a new connection to the first user has been established, to send a confirmation to the second user if the password received agrees with a stored password and, corresponding to the scrambler code number received, to activate corresponding unscrambling for ISDN signals to be received and corresponding scrambling for ISDN signals to be sent.

3. Mobile scrambler module (M1, M2) according to patent claim 1, **characterised in that** the processor (µP) is so configured as to carry out sending of the password and the scrambler code number in the time slot of the D channel reserved for user-to-user information.

4. Mobile scrambler module (M1, M2) according to patent claim 1, **characterised in that** the processor (µP) is so configured as to generate a maximum data flow of 128 bits for sending the password and the scrambler code number.

5. Mobile scrambler module (M1, M2) according to patent claim 1, **characterised in that** a memory (EPROM) is provided, to which the processor (µP) has access and in which a password and a code table containing at least two different scrambler code numbers and associated scrambler codes are stored.

6. Mobile scrambler module (M1, M2) according to patent claim 1, **characterised in that** a memory (EPROM) is provided to which the processor (µP) has access and in which at least two country-specific D channel protocols are stored.

7. Mobile scrambler module (M1, M2) according to patent claim 1, **characterised in that** four So interface connections (Sₒ IF) are provided, two serving as connector and mating connector for direct connection to a user terminal (TE5) and the other two as connector and mating connector for direct connection to a network termination device (NT1).

8. Mobile scrambler module (M1, M2) according to patent claim 1, **characterised in that** an FPGA or ASIC is provided, to which the processor (µP) has access and which is connected to two 4-wire IOM or IOM 2 interface lines, wherein in each 4-wire IOM or IOM 2 interface line one line serves to transmit user information signals from the first to the second user, a further line to transmit user information signals from the second to the first user, a further line to transmit clock signals and a further line to transmit frame signals.

## Revendications

1. Module de cryptage mobile (M1, M2) pour un premier abonné et pour le cryptage et le décryptage de signaux ISDN, comprenant au moins deux raccordements d'interfaces Sₒ (Sₒ-IF) pour le branchement du module de cryptage entre un dispositif de terminaison réseau (NT1, NT2) et au moins un terminal d'abonné (TE1, TE5) et/ou un poste secondaire (PBX) et/ou un adaptateur (TA1), au moins un processeur (µP) pour la surveillance du canal D et pour l'envoi d'un mot de passe et d'un numéro de code de cryptage après l'établissement d'une nouvelle liaison avec un deuxième abonné et pour l'activation d'un cryptage correspondant des signaux ISDN à envoyer et d'un décryptage correspondant des signaux ISDN reçus après l'obtention d'une confirmation du deuxième abonné.

2. Module de cryptage mobile (M1, M2) selon la revendication 1, **caractérisé en ce que** le processeur (µP) est conçu de façon à surveiller, après l'établissement d'une nouvelle liaison avec le premier abonné, le canal D pour déterminer si un mot de passe et un numéro de code de cryptage ont été transmis, à envoyer une confirmation au deuxième abonné si le mot de passe reçu correspond à un mot de passe enregistré et à activer, en fonction du numéro de code de cryptage reçu, un décryptage correspondant des signaux ISDN reçus et un cryptage correspondant des signaux ISDN à envoyer.

3. Module de cryptage mobile (M1, M2) selon la revendication 1, **caractérisé en ce que** le processeur (µP) est conçu de façon à réaliser l'envoi du mot de passe et du numéro de code de cryptage pendant le laps de temps réservé à l'information utilisateur-à-utilisateur du canal D.

4. Module de cryptage mobile (M1, M2) selon la revendication 1, **caractérisé en ce que** le processeur (pP) est conçu de façon à générer, pour l'envoi du mot de passe et du numéro de code de cryptage, un flux de données maximum de 128 bits.

5. Module de cryptage mobile (M1, M2) selon la revendication 1, **caractérisé en ce qu'**une mémoire (EPROM) est prévue, à laquelle le processeur (µP) a accès et dans laquelle sont enregistrés un mot de passe et un tableau de code, contenant au moins deux numéros de code de cryptage différents et les codes de cryptage correspondants.

6. Module de cryptage mobile (M1, M2) selon la revendication 1, **caractérisé en ce qu'**une mémoire (EPROM) est prévue, à laquelle le processeur (µP) a accès et dans laquelle sont enregistrés au moins deux protocoles de canal D spécifiques aux pays.

7. Module de cryptage mobile (M1, M2) selon la revendication 1, **caractérisé en ce que** quatre raccordements d'interfaces So (So-IF) sont prévus, moyennant quoi deux fiches, mâle et femelle, servent au raccordement direct à un terminal d'abonné (TE5) et les deux autres fiches, mâle et femelle, servent au raccordement direct à un dispositif de terminaison réseau (NT1).

8. Module de cryptage mobile (M1, M2) selon la revendication 1, **caractérisé en ce qu'**un FGPA ou un ASIC est prévu, auquel le processeur (µP) a accès et qui est relié à deux lignes d'interfaces 4 fils IOM ou IOM-2, moyennant quoi, pour chaque ligne d'interface IOM 4 fils ou IOM-2, une ligne sert à la transmission de signaux d'informations utiles du premier au deuxième abonné, une autre ligne sert à la transmission de signaux d'informations utiles du deuxième au premier abonné, une autre ligne sert à la transmission de signaux de synchronisation et une autre ligne sert à la transmission de signaux d'encadrement.
